(19) Europäisches Patentamt
European Patent Office
Office européen des brevets

(11) **EP 4 276 523 A1**

(12) **EUROPEAN PATENT APPLICATION**
published in accordance with Art. 153(4) EPC

(43) Date of publication:
**15.11.2023 Bulletin 2023/46**

(21) Application number: **22736767.9**

(22) Date of filing: **06.01.2022**

(51) International Patent Classification (IPC):
*G02B 30/31* (2020.01)    *G02B 30/32* (2020.01)
*G02F 1/13* (2006.01)    *H04N 13/315* (2018.01)
*H04N 13/317* (2018.01)

(52) Cooperative Patent Classification (CPC):
G02B 30/31; G02B 30/32; G02F 1/13; G09F 9/00;
H04N 13/315; H04N 13/317

(86) International application number:
**PCT/JP2022/000269**

(87) International publication number:
**WO 2022/149599 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 JP 2021001706**

(71) Applicants:
• **University Public Corporation Osaka**
  **Osaka-shi, Osaka 545-0051 (JP)**

• **Kyocera Corporation**
  **Kyoto-shi Kyoto 612-8501 (JP)**

(72) Inventors:
• **KUSAFUKA, Kaoru**
  **Kyoto-shi, Kyoto 612-8501 (JP)**
• **TAKAHASHI, Hideya**
  **Osaka-shi, Osaka 558-8585 (JP)**
• **HAMAGISHI, Goro**
  **Osaka-shi, Osaka 558-8585 (JP)**

(74) Representative: **TBK**
**Bavariaring 4-6**
**80336 München (DE)**

(54) **THREE-DIMENSIONAL DISPLAY DEVICE**

(57)    A three-dimensional display device includes a display panel that emits image light, a barrier panel overlapping the display panel in an optical path of the image light and including multiple shutter cells (S) switchable between a transmissive portion and a light-blocking portion, a position detector that detects a position of at least one of a first eye or a second eye of a viewer, and a controller that controls the display panel and the barrier panel. The controller calculates a cumulative error between a barrier pitch (Bp) and an image pitch (k) corresponding to positions of the first and second eyes of the viewer based on position detection information from the position detector, and controls, when a ratio of the calculated cumulative error to one dot is greater than a first ratio, the image pitch (k) to be greater by at least one dot to reduce the cumulative error.

FIG. 1

EP 4 276 523 A1

**Description**

TECHNICAL FIELD

The present disclosure relates to a three-dimensional (3D) display device for displaying a high-quality 3D image.

BACKGROUND OF INVENTION

A known technique is described in, for example, Patent Literature 1.

CITATION LIST

PATENT LITERATURE

Patent Literature 1: Japanese Unexamined Patent Application Publication No. 8-50280

SUMMARY

In an aspect of the present disclosure, a three-dimensional display device includes a display panel, a barrier panel, a position detector, and a controller. The display panel includes a plurality of subpixels. The plurality of subpixels is arranged in a first direction and a second direction intersecting with the first direction. The plurality of subpixels emits image light. The barrier panel overlaps the display panel in an optical path of the image light. The barrier panel includes a plurality of shutter cells. The plurality of shutter cells is arranged in the first direction and the second direction. The plurality of shutter cells is switchable between a transmissive portion to transmit light and a light-blocking portion to block the light. The position detector detects a position of at least one of a first eye or a second eye of a viewer and outputs position detection information including a position along the optical path and a position in a parallax direction corresponding to the first direction. The controller controls the display panel and the barrier panel. The controller calculates a cumulative error between a barrier pitch Bp and an image pitch k corresponding to positions of the first eye and the second eye of the viewer based on position detection information about the viewer away from a position at an observation distance, where Bp is a barrier pitch at which the transmissive portion and the light-blocking portion are arranged regularly as viewed from the position at the observation distance, and k is an image pitch of a pair of adj acent right-eye and left-eye images as viewed from the position at the observation distance. When a ratio of the calculated cumulative error to one dot is greater than a first ratio, the controller controls the image pitch k to be partially greater by at least one dot to reduce the cumulative error.

BRIEF DESCRIPTION OF THE DRAWINGS

The objects, features, and advantages of the present disclosure will become more apparent from the following detailed description and the drawings.

FIG. 1 is a plan view of a 3D display device 100 according to an embodiment of the present disclosure, illustrating its example structure.
FIG. 2 is a block diagram of the 3D display device 100, illustrating its example electrical configuration.
FIG. 3 is a front view of an example display panel.
FIG. 4 is a front view of an example barrier panel.
FIG. 5 is a diagram illustrating the positional relationship between a viewer, a barrier panel, and a display panel.
FIG. 6 is a diagram describing pixel number assignment for a barrier panel.
FIG. 7 is a diagram describing deriving of an image cycle pitch.
FIG. 8 is a diagram describing an image cycle pitch method.
FIG. 9 is a diagram describing a pattern formation position when the viewer moves in the lateral direction.
FIG. 10 is a diagram illustrating a change in a cycle pitch when the viewer moves in the front-rear direction.
FIG. 11 is a diagram illustrating subpixels observed when the viewer approaches from a position at an optimum viewing distance.
FIG. 12 is a diagram illustrating subpixels observed when the viewer moves away from the position at the optimum viewing distance.
FIG. 13 is a diagram describing the processing of subpixels that are observed simultaneously by the two eyes as a right-eye image.
FIG. 14 is a diagram describing the timing for switching a barrier pitch.

FIG. 15 is a diagram describing the timing for switching the barrier pitch.

FIG. 16 is a diagram describing the relationship between the timing for switching the barrier pitch and crosstalk.

FIG. 17 is a table showing different degrees by which a 3D image follows movement of the viewer in the front-rear direction.

DESCRIPTION OF EMBODIMENTS

As a three-dimensional (3D) display device with the structure that forms the basis of a 3D display device according to one or more embodiments of the present disclosure, a known 3D display device for allowing glasses-free 3D image viewing for a viewer directs a part of image light from a display panel to reach the right eye of the viewer through a barrier panel and another part of the image light to reach the left eye of the viewer through the barrier panel. For example, a 3D display device described in Patent Literature 1 includes a barrier panel including two facing substrates with different thicknesses to shorten the optimum viewing distance.

The known technique described in Patent Literature 1 optimizes the barrier pitch of the barrier panel and the image pitch of the display panel to improve the quality of a 3D image. The display panel and the barrier panel are thus to be developed separately as dedicated panels not to lower the image quality by a cumulative error between the barrier pitch and the image pitch corresponding to the observation distance. Techniques are thus awaited for eliminating such a cumulative error that lowers the image quality and for displaying high-quality 3D images.

The 3D display device according to one or more embodiments of the present disclosure will now be described with reference to the accompanying drawings. The structures according to one or more embodiments of the present disclosure are illustrated schematically.

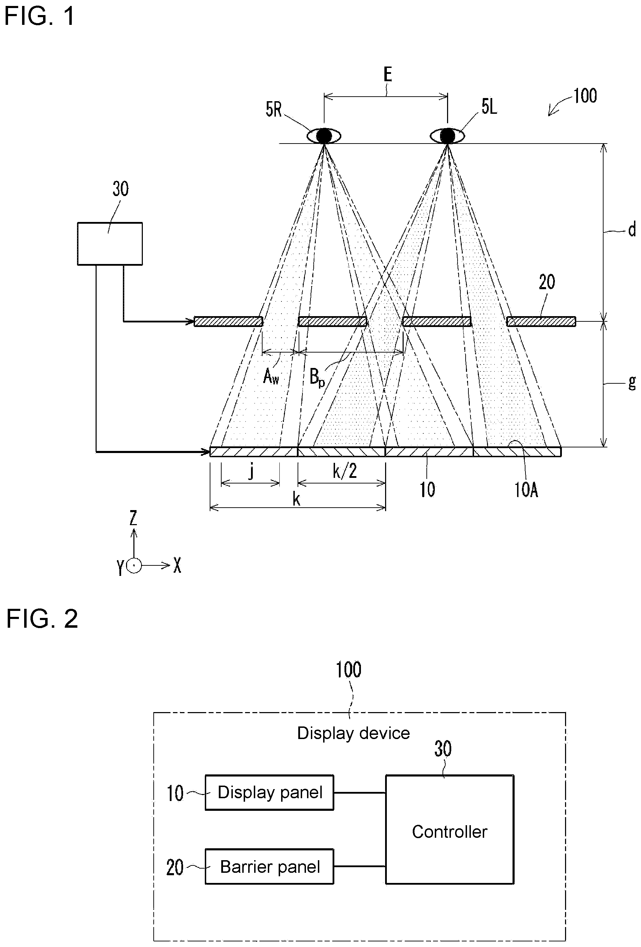

FIG. 1 is a plan view of a 3D display device 100 according to an embodiment of the present disclosure, illustrating its example structure. FIG. 2 is a block diagram of the 3D display device 100, illustrating its example structure. In the present embodiment, the 3D display device 100 includes a display panel 10, a barrier panel 20, and a controller 30. The display panel 10 and the barrier panel 20 are at overlapping positions.

The display panel 10 may be, for example, a transmissive liquid crystal panel, an organic EL panel, or an inorganic EL panel. The display panel 10 includes a display surface 10A and displays a parallax image on the display surface 10A. The parallax image includes a left-eye image and a right-eye image that has parallax with respect to the left-eye image.

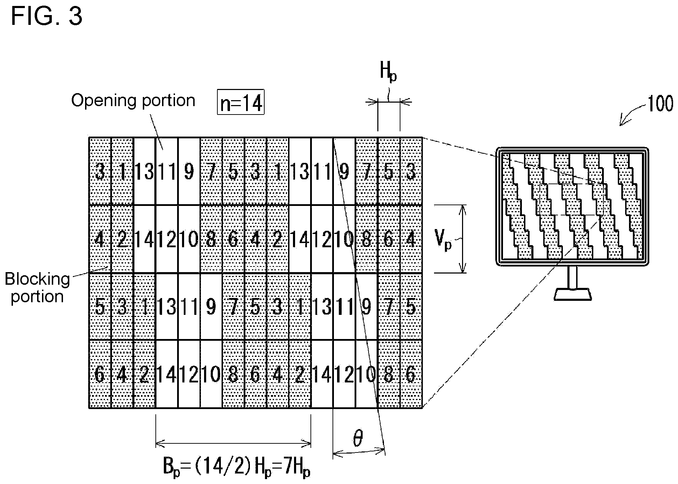

FIG. 3 is a front view of an example display panel 10. The left-eye image is also referred to as a first image, and the right-eye image as a second image. Areas displaying the left-eye image viewable by a left eye SL of the viewer are left-eye image areas PgL. Areas displaying the right-eye image viewable by a right eye 5R of the viewer are right-eye image areas PgR. The left-eye image areas PgL and the right-eye image areas PgR are arranged alternately in X-direction. The left eye SL of the viewer is also referred to as a first eye, and the right eye 5R of the viewer as a second eye. The left-eye image areas PgL are also referred to as fist image areas, and the right-eye image areas Pg as second image areas. X-direction corresponds to the direction that generates parallax between the left eye SL and the right eye 5R of the viewer.

The 3D display device 100 has an optimum viewing distance (OVD) appropriate for viewing a 3D image, which is denoted by d. The optimum viewing distance d is to be set as appropriate for the environment in which the 3D display device 100 is used.

On an imaginary vertical plane including the display surface 10A, the horizontal direction is X-direction, the vertical direction is Y-direction, and the direction perpendicular to the imaginary vertical plane is Z-direction. In this case, the 3D display device 100 includes, at overlapping positions, the display panel 10 and the barrier panel 20 each including multiple pixels arranged in a matrix in X-direction and Y-direction. The display panel 10 has the same pixel pitch k as the barrier panel 20. The barrier panel 20 is used as a parallax barrier. The barrier panel 20 is easily implementable by a liquid crystal panel without a color filter.

A two-view 3D display includes the barrier panel 20 on the display surface 10A of the display panel 10. The barrier panel 20 has a barrier pitch Bp slightly narrower than the image pitch k of the display panel 10 to implement a focusing optical system.

FIG. 3 is a front view of the display panel 10. The display surface 10A of the display panel 10 includes the left-eye image areas PgL and the right-eye image areas PgR defined by display boundaries 15. The left-eye image areas PgL emit image light that reaches the position of the left eye SL of the viewer. The right-eye image areas PgR emit image light that reaches the position of the right eye 5R of the viewer. The display panel 10 displays a left-eye image on the left-eye image areas PgL and a right-eye image on the right-eye image areas PgR. The viewer views the left-eye image displayed in the left-eye image areas PgL with the left eye SL and the right-eye image displayed in the right-eye image areas PgR with the right eye 5R. X-direction is the horizontal (or left-right) direction, Y-direction is the vertical (or up-down) direction, and Z-direction is the depth (or front-rear) direction as viewed from the viewer.

The display panel 10 includes multiple cells defined by a black matrix 51 in a gird. The cells are defined in a grid in the horizontal and vertical directions on the display surface 10A. Each cell corresponds to one subpixel 12. The horizontal length of each subpixel 12 is denoted by Hp. The vertical length of each subpixel 12 is denoted by Vp. A binocular image pitch of the display panel 10, which may also be referred to as a first interval, is denoted by k. With the binocular image pitch of the display panel 10 being k, a monocular image pitch of the display panel 10 is denoted by k/2. The image pitch is set as appropriate by the controller 30.

Each left-eye image area PgL may include six subpixels 12. The six subpixels 12 may have, for example, subnumbers P1, P2, P3, P4, P5, and P6. A subpixel 12 with the subnumber P1 is referred to as a subpixel 12_P1. Each left-eye image area PgL may include any number of subpixels 12.

Each right-eye image area PgR may include six subpixels 12. The six subpixels 12 are, for example, subpixels 12_P7, 12_P8, 12_P9, 12_P10, 12_P11, and 12_P12. Each right-eye image area PgR may include any number of subpixels 12.

The subpixels 12 are arranged in the horizontal direction with a pitch Hp on the display surface 10A. In the example of FIG. 3, the subpixels 12 in the left-eye image areas PgL are arranged in the order of subpixels 12_P2, 12_P4, and 12_P6. The subpixels 12 in the right-eye image areas PgR are arranged in the order of subpixels 12_P8, 12_P10, and 12_P12.

The subpixels 12 are arranged in the vertical direction with a pitch Vp on the display surface 10A. In the example of FIG. 3, the subpixels 12 in the left-eye image areas PgL are arranged in the order of subpixels 12_P2 and 12_P1. The subpixels 12 in the right-eye image areas PgR are arranged in the order of subpixels 12_P12, 12_P11, 12_P10, and 12_P9.

One pixel includes multiple subpixels 12 corresponding to different colors. The subpixels 12 are control units for the multiple colors included in one pixel. The subpixels 12 may be, for example, the smallest units controllable by the controller 30. The controller 30 can control the subpixels 12 more precisely as with micropixels. The controller 30 controls the subpixels 12 to cause the display panel 10 to display an image. In the example of FIG. 3, each subpixel 12 is rectangular. Each subpixel 12 may have a different shape such as a square and a trapezoid as viewed from the front.

The display panel 10 controlled by the controller 30 may undergo an irregularity process at predetermined intervals in the horizontal direction on the display surface 10A. The irregularity process causes a regular image pitch to be irregular. The irregularity process includes, for example, adding, between the left-eye image areas PgL and the right-eye image areas PgR, one or more subpixels 12 displaying an image included neither in the right-eye image nor in the left-eye image, deleting one or more predetermined subpixels 12 from the left-eye image areas PgL, or deleting one or more predetermined subpixels 12 from the right-eye image areas PgR. Adding one or more subpixels 12 displaying an image included neither in the right-eye image nor in the left-eye image may include, for example, adding one or more subpixels 12 displaying a black image between the left-eye image areas PgL and the right-eye image areas PgR as illustrated in FIG. 3, or adding one or more subpixels 12 displaying a white image between the left-eye image areas PgL and the right-eye image areas PgR.

For example, the display panel 10 includes subpixels 12 included neither in the left-eye image areas PgL nor in the right-eye image areas PgR and arranged between the left-eye image areas PgL and the right-eye image areas PgR at predetermined intervals. Such subpixels 12 display a black image. The subpixels 12 arranged at predetermined intervals are the subpixels 12 in portions to undergo the irregularity process.

For example, the display panel 10 includes subpixels 12 included neither in the left-eye image areas PgL nor in the right-eye image areas PgR and arranged between the left-eye image areas PgL and the right-eye image areas PgR at predetermined intervals. Such subpixels 12 display a white image. The subpixels 12 arranged at predetermined intervals are the subpixels 12 in portions to undergo the irregularity process.

The display panel 10 undergoes the irregularity process performed at predetermined intervals by the controller 30. This minimizes the deviation of the barrier pitch of the barrier panel 20 and the image pitch of the display panel 10 from their optimum values. The 3D display device 100 can thus include the display panel 10 and the barrier panel 20 having, for example, the same pitch.

The barrier panel 20 may be a liquid crystal shutter. The liquid crystal shutter includes multiple shutter cells S arranged in a matrix. The controller 30 controls a voltage applied to a liquid crystal in each shutter cell to change the light transmittance of the liquid crystal shutter. The barrier panel 20 is not limited to a liquid crystal shutter, but may be, for example, a MEMS shutter panel.

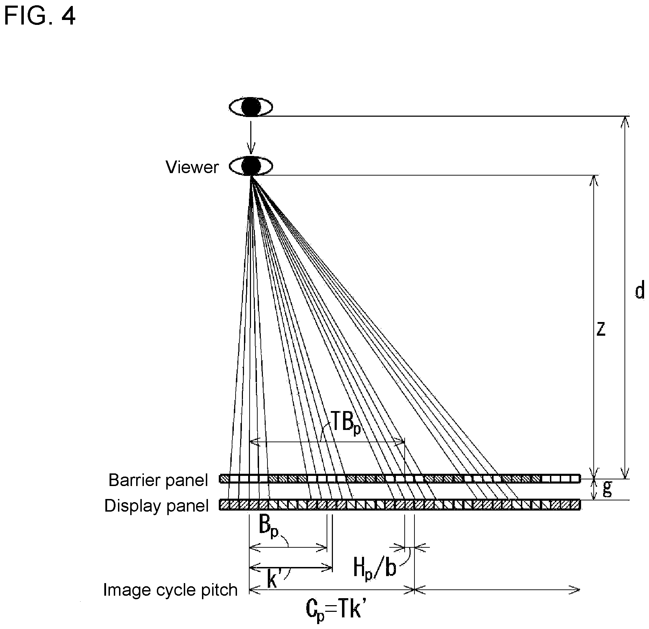

FIG. 4 is a front view of the barrier panel 20. The barrier panel 20 includes a panel surface 20C and multiple shutter cells S arranged in a grid in the horizontal and vertical directions on the panel surface 20C. The barrier panel 20 includes transmissive portions 20A and light-blocking portions 20B. The transmissive portions 20A are also referred to as first transmissive portions, and the light-blocking portions 20B as second transmissive portions. The transmissive portions 20A transmit image light emitted from the display panel 10 at a first predetermined value of transmittance or greater. The light-blocking portions 20B transmit image light emitted from the display panel 10 at a second predetermined value of transmittance or lower. The first predetermined value may be greater than the second predetermined value. The ratio of the second predetermined value to the first predetermined value may be 1/100 in one example. The ratio of the second predetermined value to the first predetermined value may be 1/1000 in another example. The barrier panel 20 can change the relative attenuation of image light emitted from the display panel 10.

The barrier panel 20 defines the traveling direction of image light emitted from the display panel 10. The traveling direction of image light may be referred to as a ray direction. The barrier panel 20 defines the ray direction to determine areas on the display surface 10A viewable by each of the right eye 5R and the left eye SL of the viewer. The areas viewable by the right eye 5R of the viewer may be referred to as right-eye viewing areas, and areas viewable by the left eye SL of the viewer as left-eye viewing areas. For example, the barrier panel 20 allows image light emitted from some of the subpixels 12 on the display surface 10A to reach the left eye SL of the viewer through the transmissive portions 20A. For example, the barrier panel 20 allows image light emitted from some of the other subpixels 12 on the display surface 10A to reach the right eye 5R of the viewer through the transmissive portions 20A. The controller 30 controls the display panel 10 to align the left-eye image areas PgL with the left-eye viewing areas and the right-eye image areas PgR with the right-eye viewing areas. This allows the viewer to view the left-eye image with the left eye SL and the right-eye image with the right eye 5R. The viewer can thus view a 3D image.

The controller 30 controls the light transmittance of each shutter cell S in the barrier panel 20, causing some of the shutter cells S to be the transmissive portions 20A and some of the other shutter cells S to be the light-blocking portions 20B. The transmissive portions 20A and the light-blocking portions 20B alternate in the horizontal direction on the panel surface 20C. Each shutter cell S has a horizontal length SW and a vertical length SH. The barrier panel 20 has the barrier pitch Bp. The barrier pitch Bp may be referred to as a second interval. The barrier pitch Bp is set as appropriate by the controller 30. Each shutter cell S in the barrier panel 20 may have the same size as or a different size from each subpixel 12 in the display panel 10.

The shutter cells S are the smallest units controllable by the controller 30. The controller 30 controls the shutter cells S to change shapes of the transmissive portions 20A and the light-blocking portions 20B in the barrier panel 20 to intended shapes.

The barrier panel 20 controlled by the controller 30 undergoes an irregularity process at predetermined intervals in the horizontal direction. The predetermined interval may be referred to as a third interval. The irregularity process includes, for example, adding one or more predetermined shutter cells S to the transmissive portions 20A and deleting one or more predetermined shutter cells S from the light-blocking portions 20B. The irregularity process includes, for example, adding one or more predetermined shutter cells S to the light-blocking portions 20B and deleting one or more predetermined shutter cells S from the transmissive portions 20A.

For example, the barrier panel 20 may add one shutter cell S to the transmissive portions 20A in the horizontal direction and delete one shutter cell S from the light-blocking portions 20B in the horizontal direction at predetermined intervals. For example, the barrier panel 20 may add one shutter cell S to the light-blocking portions 20B in the horizontal direction and delete one shutter cell S from the transmissive portions 20A in the horizontal direction at predetermined intervals.

For example, the barrier panel 20 may add two shutter cells S to the transmissive portions 20A in the horizontal direction and delete two shutter cells S from the light-blocking portions 20B in the horizontal direction at predetermined intervals. For example, the barrier panel 20 may add two shutter cells S to the light-blocking portions 20B in the horizontal direction and delete two shutter cells S from the transmissive portions 20A in the horizontal direction at predetermined intervals.

The controller 30 controls the barrier pitch Bp of the barrier panel 20 as appropriate to minimize the deviation of the barrier pitch Bp and the image pitch k from their optimum values. The 3D display device 100 can thus include the display panel 10 and the barrier panel 20 having, for example, the same pitch.

The controller 30 is connected to the components of the 3D display device 100 to control these components. The controller 30 may be, for example, a processor. The controller 30 may include one or more processors. The processors may include a general-purpose processor that reads a specific program and performs a specific function, and a processor dedicated to specific processing. The dedicated processor may include an application-specific integrated circuit (ASIC).

The processors may include a programmable logic device (PLD). The PLD may include a field-programmable gate array (FPGA). The controller 30 may be either a system on a chip (SoC) or a system in a package (SiP) in which one or more processors cooperate with other components. The controller 30 may include a storage, and store various items of information or programs to operate each component of the 3D display device 100. The storage may be, for example, a semiconductor memory. The storage may function as a work memory for the controller 30.

The controller 30 controls the subpixels 12 in the left-eye image areas PgL in the display panel 10 to display a part of a left-eye image. For example, the controller 30 controls the subpixels 12_P1 to 12_P6 in each left-eye image area PgL in the display panel 10 to display a part of a left-eye image.

The controller 30 controls the subpixels 12 in the right-eye image areas PgR in the display panel 10 to display a part of a right-eye image. For example, the controller 30 controls the subpixels 12_P7 to 12_P12 in each right-eye image area PgR in the display panel 10 to display a part of a right-eye image.

The controller 30 controls one or more predetermined subpixels 12 in the display panel 10 to display a black image. The predetermined subpixels 12 correspond to the subpixels 12 in the portions to undergo the irregularity process. The black image has a predetermined luminance level indicating, for example, a black color. The predetermined luminance level may have the lowest gradation displayable by the subpixels 12, or may be a value corresponding to the luminance level with a gradation equivalent to the lowest gradation.

The controller 30 controls one or more predetermined subpixels 12 in the display panel 10 to display a white image. The predetermined subpixels 12 correspond to the subpixels 12 in the portions to undergo the irregularity process. The white image has a predetermined luminance level indicating, for example, a white color. The predetermined luminance level may have the highest gradation displayable by the subpixels 12, or may be a value corresponding to the luminance level with a gradation equivalent to the highest gradation.

The controller 30 performs the irregularity process at predetermined intervals. For example, as illustrated in FIG. 3, the controller 30 performs the irregularity process by controlling one or more predetermined subpixels 12 to display a black image at predetermined intervals. The predetermined subpixels 12 are between subpixels 12 included in the left-eye image areas PgL and subpixels 12 included in the right-eye image areas PgR. For example, the controller 30 performs the irregularity process by controlling one or more predetermined subpixels 12 to display a white image at predetermined intervals. The predetermined subpixels 12 are between subpixels 12 included in the left-eye image areas PgL and subpixels 12 included in the right-eye image areas PgR.

For example, the controller 30 performs the irregularity process by controlling one or more predetermined subpixels 12 to display an image included neither in the right-eye image nor in the left-eye image at predetermined intervals. The predetermined subpixels 12 are between subpixels 12 included in the left-eye image areas PgL and subpixels 12 included in the right-eye image areas PgR. For example, the controller 30 performs the irregularity process by reducing the number of subpixels 12 included in the left-eye image areas PgL at predetermined intervals. For example, the controller 30 performs the irregularity process by reducing the number of subpixels 12 included in the right-eye image areas PgR at predetermined intervals.

The controller 30 controls the shutter cells S in the barrier panel 20 to define the transmissive portions 20A that transmit image light from the display panel 10 at the first predetermined value of transmittance or greater. The controller 30 controls the shutter cells S in the barrier panel 20 to define the light-blocking portions 20B that transmit image light from the display panel 10 at the second predetermined value of transmittance or less.

The controller 30 performs the irregularity process at predetermined intervals. For example, the controller 30 adds one or more predetermined shutter cells S to the transmissive portions 20A and deletes one or more predetermined shutter cells S from the light-blocking portions 20B at predetermined intervals. For example, the controller 30 adds one or more predetermined shutter cells S to the light-blocking portions 20B and deletes one or more predetermined shutter cells S from the transmissive portions 20A at predetermined intervals.

For example, the controller 30 adds one shutter cell S to the transmissive portions 20A in the horizontal direction and deletes one shutter cell S from the light-blocking portions 20B in the horizontal direction at predetermined intervals. For example, the controller 30 adds one shutter cell S to the light-blocking portions 20B in the horizontal direction and deletes one shutter cell S from the transmissive portions 20A in the horizontal direction at predetermined intervals.

The controller 30 may calculate the predetermined interval based on the total deviation of the image pitch k and the barrier pitch Bp in the horizontal direction. The controller 30 may calculate the predetermined interval to perform the irregularity process in an area in which the total deviation of the image pitch k and the barrier pitch Bp in the horizontal direction exceeds a predetermined amount. For example, the controller 30 may calculate the predetermined interval to perform the irregularity process in an area in which the total deviation of the image pitch k and the barrier pitch Bp in the horizontal direction exceeds a length Hp/2, which is half the horizontal length of one subpixel 12. A period is calculated as the predetermined interval. For example, the controller 30 may calculate the predetermined interval to perform the irregularity process in an area in which the total deviation of the image pitch k and the barrier pitch Bp in the horizontal direction exceeds a length 1Hp, which is the horizontal length of one subpixel 12. In this case, the predetermined interval is calculated as a period taken for the total deviation of the image pitch k and the barrier pitch Bp in the horizontal direction to be the horizontal length of one subpixel 12 from zero.

The controller 30 may set the predetermined amount based on the horizontal length of the subpixels 12 included in the display panel 10. For example, the controller 30 may set the length Hp/2, which is half the horizontal length of one subpixel 12, as the predetermined amount. For example, the controller 30 may set the length 1Hp, which is the horizontal length of one subpixel 12, as the predetermined amount.

For example, the controller 30 may perform the irregularity process in an area in which the total deviation of the image pitch k and the barrier pitch Bp in the horizontal direction exceeds the length 1/2Hp. The controller 30 may control, as the irregularity process, one or more predetermined subpixels 12 to display a black image. The predetermined subpixels 12 are between subpixels 12 included in a left-eye image area PgL and subpixels 12 included in a right-eye image area PgR.

For example, the controller 30 may perform the irregularity process in an area in which the total deviation of the image pitch k and the barrier pitch Bp in the horizontal direction exceeds the length 1/2Hp. The controller 30 may control, as the irregularity process, one or more predetermined subpixels 12 to display a white image. The predetermined subpixels 12 are between subpixels 12 included in a left-eye image area PgL and subpixels 12 included in a right-eye image area PgR.

For example, the controller 30 may perform the irregularity process in an area in which the total deviation of the image pitch k and the barrier pitch Bp in the horizontal direction exceeds the length 1Hp. The controller 30 may perform the irregularity process by, for example, adding one shutter cell S to a transmissive portion 20A in the horizontal direction and deleting one shutter cell S from a light-blocking portion 20B in the horizontal direction.

For example, the controller 30 may perform the irregularity process in an area in which the total deviation of the image pitch k and the barrier pitch Bp in the horizontal direction exceeds the length 1Hp. The controller 30 may perform the irregularity process by deleting one shutter cell S from a transmissive portion 20A in the horizontal direction and adding one shutter cell S to a light-blocking portion 20B in the horizontal direction.

In the example described above, the display panel 10 does not include an area included neither in a left-eye image area PgL nor in a right-eye image area PgR between a left-eye image area PgL and a right-eye image area PgR. The left-eye image areas PgL and the right-eye image areas PgR are thus adjacent to one another. The display panel 10 may have another structure. For example, the display panel 10 may include an area included neither in a left-eye image area PgL nor in a right-eye image area PgR between a left-eye image area PgL and a right-eye image area PgR. The left-eye image areas PgL and the right-eye image areas PgR may thus not be adjacent to one another. When the display panel 10 includes an area included neither in the left-eye image areas PgL nor in the right-eye image areas PgR between left-eye image areas PgL and right-eye image areas PgR, the controller 30 may perform the irregularity process by reducing the horizontal length of the area included neither in the left-eye image areas PgL nor in the right-eye image areas PgR.

In the present embodiment, the 3D display device 100 includes the controller 30 that performs the irregularity process at predetermined intervals. This minimizes the deviation of the barrier pitch of the barrier panel 20 and the image pitch of the display panel 10 from their optimum values. The 3D display device 100 can thus include the display panel 10 and the barrier panel 20 having, for example, the same pitch.

A 3D display system includes a position detector to detect the position of the left eye SL or the right eye 5R, and the 3D display device 100. The 3D display system may be incorporated in a head-up display (HUD). The HUD includes the 3D display system, an optical member such as a reflecting mirror, and a projection reception member including a projection screen. The HUD directs image light from the 3D display system to reach the projection reception member through the optical member. The HUD thus projects an image onto the projection reception member. The HUD directs image light reflected from the projection reception member to reach the left eye SL and the right eye 5R of the viewer. The HUD thus directs the image light to travel from the 3D display system to the left eye SL and the right eye 5R of the viewer. The viewer can thus view image light reaching the eyes as a virtual image.

For the 3D display device 100 including the position detector, the position detector detects the position of either the left eye SL or the right eye 5R of the viewer and outputs the detected position to the controller 30. The position detector may include, for example, a camera. The position detector may capture an image of the face of the viewer with the camera. The position detector may detect the position of at least one of the left eye SL or the right eye 5R of the viewer using the image captured with the camera. The position detector may detect, using an image captured with a single camera, the position of at least one of the left eye SL or the right eye 5R of the viewer as coordinates in a 3D space. The position detector may detect, using images captured with two or more cameras, the position of at least one of the left eye SL or the right eye 5R of the viewer as coordinates in a 3D space.

The position detector may include no camera and may be connected to an external camera. The position detector may include an input terminal for receiving signals from the external camera. The external camera may be directly connected to the input terminal. The external camera may be indirectly connected to the input terminal through a shared network. The position detector including no camera may include the input terminal for receiving image signals from the camera. The position detector including no camera may detect the position of at least one of the left eye SL or the right eye 5R of the viewer using the image signals input into the input terminal.

The position detector may include a sensor. The sensor may be an ultrasonic sensor or an optical sensor. The position detector may detect the position of the head of the viewer with the sensor, and detect the position of at least one of the left eye SL or the right eye 5R of the viewer based on the position of the head. The position detector may detect, with one sensor or two or more sensors, the position of at least one of the left eye SL or the right eye 5R of the viewer as coordinates in a 3D space.

The position detector may detect, based on the detection result of the position of at least one of the left eye SL or the right eye 5R of the viewer, the moving distances of the left eye SL and the right eye 5R in a first direction.

The 3D display device 100 may not include the position detector. When the 3D display device 100 does not include the position detector, the controller 30 may include an input terminal for receiving signals from an external detector. The external detector may be connected to the input terminal. The external detector may use electrical signals and optical signals as transmission signals transmitted to the input terminal. The external detector may be indirectly connected to the input terminal through a shared network. The controller 30 may receive position coordinates indicating the position of at least one of the left eye SL or the right eye 5R of the viewer input from the external position detector. The controller 30 may calculate, based on the position coordinates, the moving distances of the left eye SL and the right eye 5R of the viewer in the first direction.

The HUD including the 3D display device 100 may be mounted on a movable body. The HUD may include components that also serve as other devices or components included in the movable body. For example, the movable body may use a windshield as the projection reception member. The HUD and the 3D display device 100 may include components that also serve as devices or components included in the movable body. The devices or components of the movable body serving as devices or components included in the HUD may be referred to as HUD modules or 3D display components. In one or more embodiments of the present disclosure, examples of the movable body include a vehicle, a vessel, and an aircraft. In one or more embodiments of the present disclosure, examples of the vehicle include, but are not limited to, an automobile and an industrial vehicle, and may also include a railroad vehicle, a community vehicle, and a fixed-wing aircraft traveling on a runway.

Examples of the automobile include, but are not limited to, a passenger vehicle, a truck, a bus, a motorcycle, and a trolley bus, and may also include another vehicle traveling on a road. Examples of the industrial vehicle include an industrial vehicle for agriculture and an industrial vehicle for construction. Examples of the industrial vehicle include, but are not limited to, a forklift and a golf cart. Examples of the industrial vehicle for agriculture include, but are not limited to, a tractor, a cultivator, a transplanter, a binder, a combine, and a lawn mower. Examples of the industrial vehicle for construction include, but are not limited to, a bulldozer, a scraper, a power shovel, a crane vehicle, a dump truck, and a road roller. Examples of the vehicle include a human-powered vehicle. The classification of the vehicle is not limited to the above. Examples of the automobile may include an industrial vehicle travelling on a road, and one type of vehicle may fall within multiple classes. In one or more embodiments of the present disclosure, examples of the vessel include a jet ski, a boat, and a tanker. In one or more embodiments of the present disclosure, examples of the aircraft include a fixed-wing aircraft and a rotary-wing aircraft.

In the present embodiment, the 3D display device 100 includes the controller 30 described above with the structure described later.

Positional Relationship between Viewer, Barrier Panel, and Display Panel

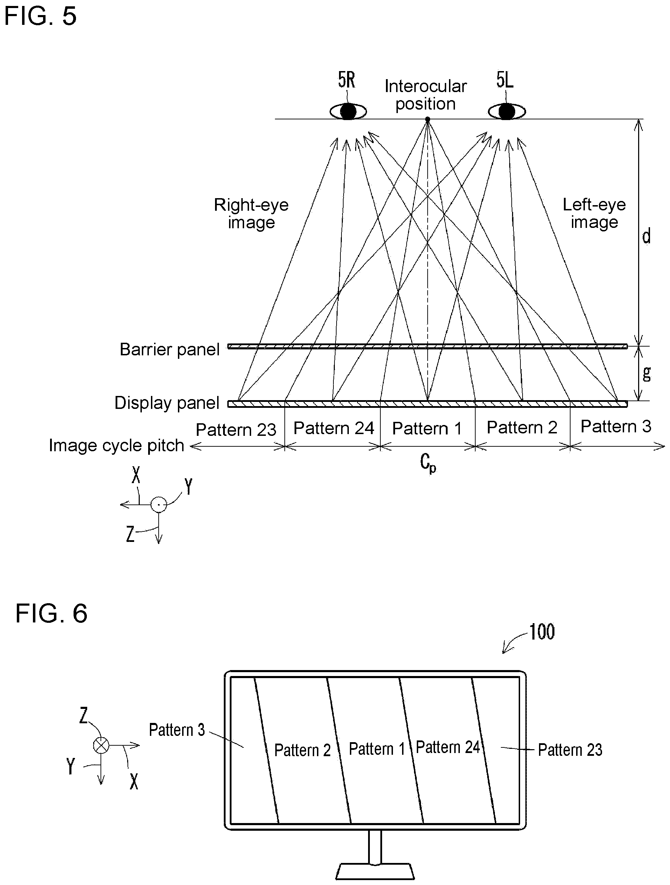

FIG. 5 is a diagram illustrating the positional relationship between the viewer, the barrier panel 20, and the display panel 10. The ratio of an interocular distance E to the optimum viewing distance d is equal to the ratio of the image pitch k of the display panel 10 to a distance g between the display panel 10 and the barrier panel 20 as expressed by Formulas 1 and 2 below.

$$E : d = \frac{k}{2} : g \qquad \cdots (1)$$

$$B_p : d = k : d + g \qquad \cdots (2)$$

The optimum viewing distance d is expressed by Formula 3 based on Formulas 1 and 2 and changes as the barrier pitch Bp changes.

$$d = \frac{g(2E - B_P)}{B_P} \qquad \cdots (3)$$

FIG. 6 is a diagram describing pixel number assignment for the barrier panel 20. A pixel number is then assigned to each subpixel 12 in the barrier panel 20 as illustrated in FIG. 6. The transmissive portions 20A and the light-blocking portions 20B are expressed by Formula 4 below, where Hp is the width of a subpixel 12 in the first direction (X-direction), Vp is the width of a subpixel 12 in Y-direction, $\theta$ is the inclination angle of each of the transmissive portions 20A and the light-blocking portions 20B with respect to Y-direction as a second direction, and a and b are natural numbers and $a \neq b$.

$$\theta = \tan^{-1}\left(\frac{aH_P}{bV_P}\right) = \tan^{-1}\left(\frac{1H_P}{2V_P}\right) \qquad \cdots (4)$$

An image cycle pitch method assigns pixel numbers to the barrier panel 20 rather than the display panel 10. The relationship between the barrier pitch Bp and n subpixels 12 with the width Hp is expressed by Formula 5.

$$B_P = \frac{nH_P}{b} \qquad \cdots (5)$$

An image cycle pitch Cp is derived as in Formulas 6 to 9 below.

$$C_P = \tau k' = \tau B_P + \frac{H_P}{b} \qquad \cdots (6)$$

Formula 7 is obtained by eliminating $\tau$ in Formula 6.

$$C_P = \frac{k'H_P}{b(k'-B_P)} \qquad \cdots (7)$$

Formula 8 is obtained by transforming Formula 7.

$$B_P : z = k' : z + g \qquad \cdots (8)$$

Formula 9 is obtained by eliminating k' and $B_p$ in Formula 8.

$$C_P(z) = \frac{H_P}{bg}z + \frac{H_P}{b} \qquad \cdots (9)$$

Image Cycle Pitch Method

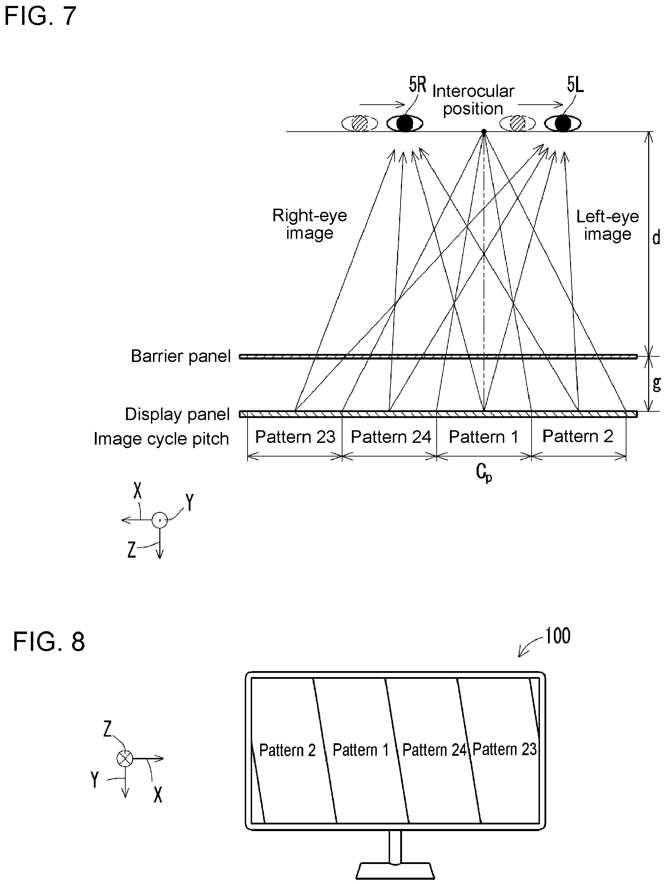

FIG. 8 is a diagram describing the image cycle pitch method. As illustrated in FIG. 8, a perpendicular line is drawn from the interocular position to the display surface 10A of the display panel 10 to define each pattern area with a width of the image cycle pitch being Cp = rk' on the display surface 10A with respect to the intersection between the perpendicular line and the display surface 10A.

Lateral Movement of Viewer

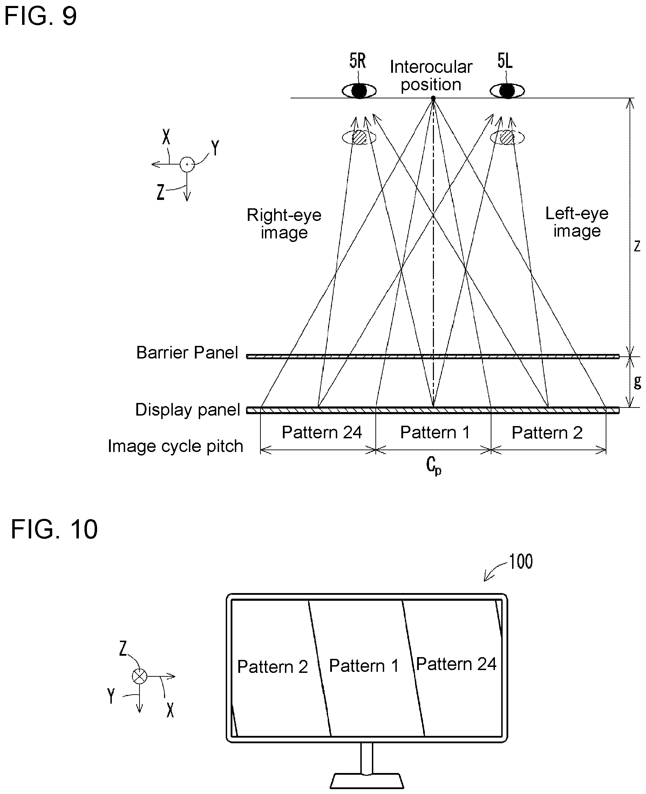

FIG. 9 is a diagram describing a pattern formation position when the viewer moves in the lateral direction. As illustrated in FIG. 9, pattern formation positions 1, 2, ... change as the viewer moves in the lateral direction.

Forward and Backward Movement of Viewer

FIG. 10 is a diagram illustrating a change in the image cycle pitch Cp when the viewer moves in the front-rear direction. As illustrated in FIG. 10, the image cycle pitch Cp is to be larger as the observation distance z + g is to be larger.

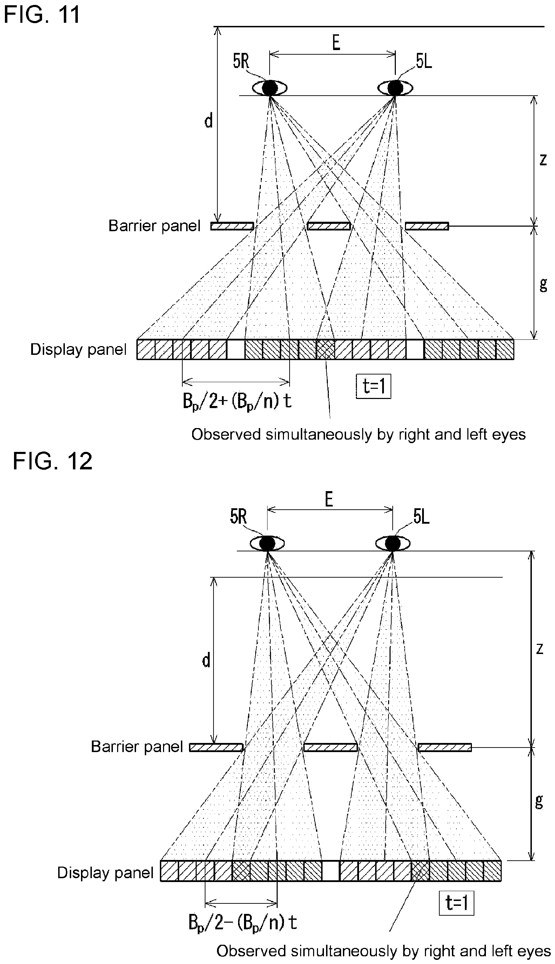

FIG. 11 is a diagram illustrating subpixels observed when the viewer approaches from a position at an optimum viewing distance. As illustrated in FIG. 11, when the viewer approaches from the position at the optimum viewing distance d, the number of subpixels 12 simultaneously observed by the eyes 5R and 5L increases as expressed by Formulas 10 to 12 below.

$$E : z = \frac{B_P}{2} + \frac{B_P}{n} t : g \qquad \cdots (10)$$

$$z(t) = \frac{n(d+g)}{n+2t} \qquad \cdots (11)$$

$$t(z) = \frac{bEg}{H_p z} - \frac{n}{2} \qquad \cdots (12)$$

FIG. 12 is a diagram illustrating subpixels observed when the viewer moves away from the position at the optimum viewing distance. As illustrated in FIG. 12, when the viewer moves away from the position at the optimum viewing distance d, the number of subpixels 12 simultaneously observed by the eyes 5R and 5L increases as expressed by Formulas 13 to 15.

$$E : z = \frac{B_P}{2} + \frac{B_P}{n} t : g \qquad \cdots (13)$$

,

where z < d.

$$z(t) = \frac{n(d+g)}{n+2t} \qquad \cdots (14)$$

This structure allows the 3D display device 100 to change the image cycle pitch Cp(z) as appropriate for the observation distance z and display high-quality 3D images when the viewer moves in Z-direction.

$$t(z) = -\frac{bEg}{H_p z} + \frac{n}{2} \qquad \cdots (15)$$

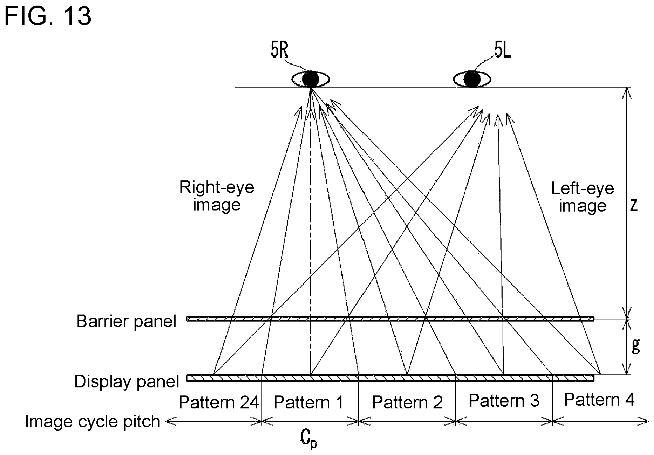

FIG. 13 is a diagram describing the processing of subpixels 12 that are observed simultaneously by the two eyes as a right-eye image. As illustrated in FIG. 13, the simultaneously observed subpixels 12 are processed as a right-eye image. The simultaneously observed subpixels 12 are processed as a right-eye image based on the position of the right eye rather than based on the interocular position.

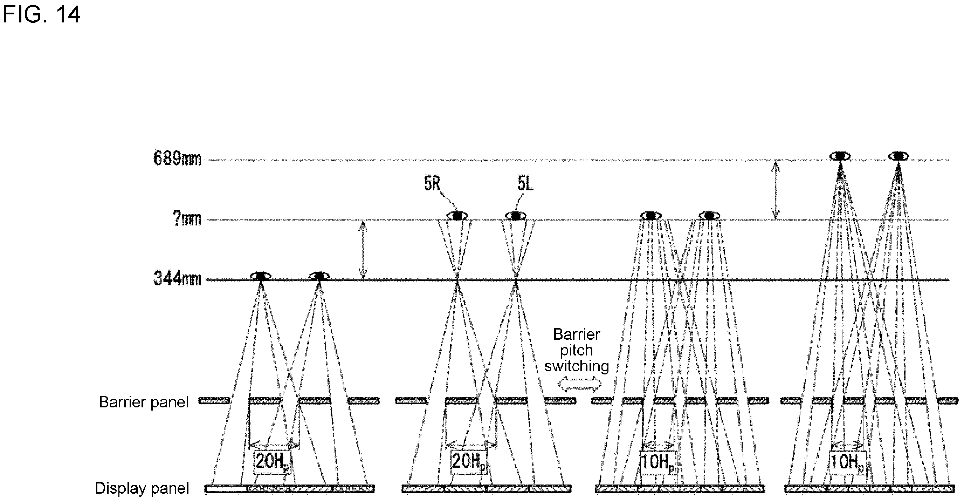

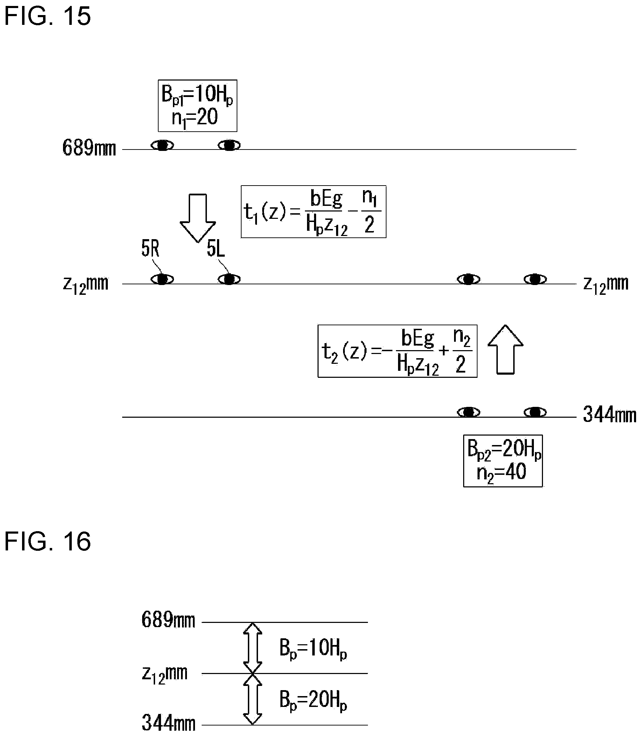

FIG. 14 is a diagram describing the timing for switching the barrier pitch Bp. FIG. 15 is a diagram describing the timing for switching the barrier pitch Bp. FIG. 16 is a diagram describing the relationship between the timing for switching the barrier pitch Bp and crosstalk. As illustrated in FIGs. 14 to 16, the barrier pitch Bp is to be switched within the optimum viewing distance at the timing set as appropriate based on the number of simultaneously observed subpixels 12. When the viewer moves away, the barrier pitch Bp is to be a barrier pitch Bp1 expressed by Formula 16.

$$B_{P1} = 10 H_p \qquad \cdots (16)$$

In one example, the number of subpixels 12 is $n_1 = 20$.

$$t_1(z) = \frac{bEg}{H_p z_{12}} + \frac{n_1}{2} \qquad \cdots (17)$$

$$t_2(z) = \frac{bEg}{H_p z_{12}} + \frac{n_2}{2} \qquad \cdots (18)$$

When the ratio of the numbers of subpixels observed by one eye matches the ratio of the numbers of subpixels observed simultaneously, a similar degree of crosstalk seems to occur.

$$n_1 : n_2 = t_{1:} : t_2 \qquad \cdots (19)$$

$$z_{12} = \frac{(n_1 + n_2)nEg}{n_1 n_2 H_p} \qquad \cdots (20)$$

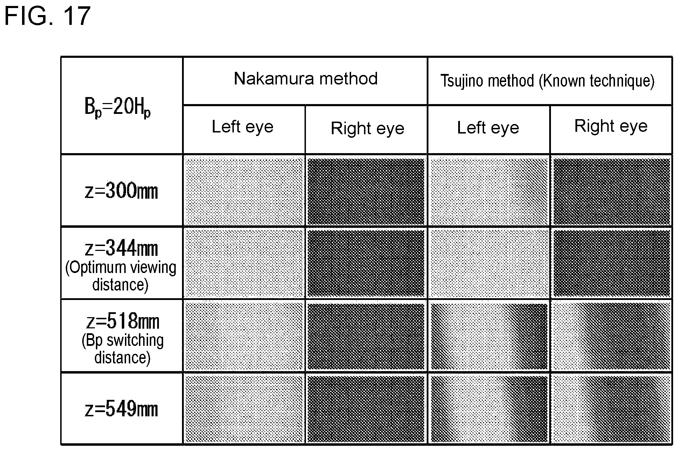

FIG. 17 is a table showing different degrees by which a 3D image follows movement of the viewer in the front-rear direction. For an active barrier system including a stack of two liquid crystal panels with the same pitch, as illustrated in FIG. 17, the active barrier pitch is fixed and the ratio of partially adding a different pitch to the image pitch k is changed. With the image density of a right-eye image changing a lesser degree from the image density of the reference image viewed at the optimum viewing distance compared with a right-eye image viewed with a known technique when the viewer moves in the front-rear direction, the 3D display device 100 according to the embodiment of the present disclosure can follow the movement of the viewer more precisely. The 3D display device 100 according to the embodiment of the present disclosure can thus expand the range of stereoscopic viewing.

As described above, in the present embodiment, the 3D display device 100 includes the display panel 10, the barrier panel 20, the position detector, and the controller 30. The display panel 10 includes the multiple subpixels 12. The subpixels 12 are arranged in X-direction and Y-direction intersecting with X-direction. The subpixels 12 emit image light. The barrier panel 20 overlapping the display panel 10 in the optical path of the image light includes the multiple shutter cells S. The shutter cells S are arranged in X-direction and Y-direction. The shutter cells S are each switchable between a transmissive portion 20A that transmits light and a light-blocking portion 20B that blocks the light. The position detector detects the position of at least one of the first eye 5R or the second eye SL of the viewer and outputs position detection information including the position along the optical path and the position in the parallax direction corresponding to the first direction. The controller 30 controls the display panel 10 and the barrier panel 20.

When the barrier pitch is Bp and the image pitch is Cp, the controller 30 calculates a cumulative error between the barrier pitch Bp and the image pitch k corresponding to the positions of the first eye 5R and the second eye SL of the viewer based on the position detection information from the position detector. When the ratio of the calculated cumulative error to one dot (corresponding to a subpixel 12) is greater than a first ratio, the controller 30 controls the image pitch Cp to be greater or smaller by at least one dot.

This structure can eliminate the cumulative error between the barrier pitch Bp and the image pitch k as appropriate for the observation distance z to obtain an optimum 3D image, without largely changing the structure of the 3D display device.

In the 3D display device 100 according to the present embodiment, the barrier pitch Bp may correspond to the interval of the transmissive portions 20A and the light-blocking portions 20B in the first direction.

In the 3D display device 100 according to the present embodiment, Z-direction may be perpendicular to X-direction as viewed in plan.

In the 3D display device 100 according to the present embodiment, the first ratio is 0.5 or a value close to 1.

In the present embodiment, the controller 30 in the 3D display device 100 may cause the subpixels 12 and the shutter cells S in the transmissive portions 20A and the light-blocking portions 20B to be arranged at an inclination angle θ expressed by Formula 21, and control the shutter cells S to have a barrier pitch Bp1 or a barrier pitch Bp2 that is different from the barrier pitch Bp of the barrier panel 20, where Hp is the width of a subpixel 12 in the first direction, Vp is the width of a subpixel 12 in the second direction, θ is the inclination angle of each of the transmissive portions 20A and the light-blocking portions 20B with respect to the second direction, and a and b are natural numbers and a ≠ b.

$$\theta = \tan^{-1}(\frac{a \cdot Hp}{b \cdot Vp})$$

$$\cdots (2 1)$$

This allows the 3D display device 100 to change the barrier pitch Bp to reduce or eliminate the cumulative error that can occur between the barrier pitch Bp and the image pitch k in response to the change in the observation distance z.

In the 3D display device 100 according to the present embodiment, the barrier panel 20 is in front of the display panel 10 in the optical path, and the display panel 10 includes first display areas that emit image light to be perceived by the first eye 5R of the viewer and second display areas that emit image light to be perceived by the second eye SL of the viewer. The first display areas are arranged in the first direction at the first intervals. The second display areas are arranged in the first direction at the second intervals different from the first intervals. The controller 30 may control the shutter cells S for the image cycle pitch Cp(z) to satisfy the Formula 22 below, where b (natural number) is the number of shutter cells S included in the transmissive portions 20A and the light-blocking portions 20B in Z-direction, z is the observation distance between the barrier panel 20 and at least one of the first eye 5R or the second eye SL of the viewer approaching the barrier panel 20, and g is the distance between the display panel 10 and the barrier panel 20.

$$Cp(z) = \frac{Hp}{(+g) \cdot b} \cdot z + \frac{Hp}{b}$$

$$\cdots (2 2)$$

This structure allows the 3D display device 100 to change the barrier pitch Bp to reduce or eliminate the cumulative error that can occur between the barrier pitch Bp and the image pitch k in response to the change in the observation distance z.

In the 3D display device 100 according to the present embodiment, the barrier panel 20 is behind the display panel 10 in the optical path, and the display panel 10 includes the first display areas that emit image light to be perceived by the first eye 5R of the viewer and the second display areas that emit image light to be perceived by the second eye SL of the viewer. The first display areas are arranged in the first direction at the first intervals. The second display areas are arranged in the first direction at the second intervals different from the first intervals.

The controller 30 may control the shutter cells S for the image cycle pitch Cp(z) to satisfy the Formula 23 below, where b (natural number) is the number of shutter cells S included in the transmissive portions 20A and the light-blocking portions 20B in X-direction, z is the observation distance between the barrier panel 20 and at least one of the first eye 5R or the second eye SL of the viewer approaching the display panel 10, and g is the distance between the display panel 10 and the barrier panel 20. This allows the 3D display device 100 to change the image cycle pitch Cp(z) as appropriate for the observation distance z and display a high-quality 3D image when the viewer moves in Z-direction.

$$Cp(z) = \frac{Hp}{(-g) \cdot b} \cdot z + \frac{Hp}{b}$$

$$\cdots (2 3)$$

In the 3D display device 100 according to the present embodiment, the controller 30 may calculate the number of subpixels ti(z) with Formula 24 below, where E is the interocular distance between the first eye 5R and the second eye SL of the viewer approaching the barrier panel 20, and the intersection between the display surface 10A of the display panel 10 and a perpendicular line extending through the center position between the first eye 5R and the second eye SL and perpendicular to the display surface 10A is the reference point. The controller 30 then forms multiple pattern areas defined by a combination of the transmissive portions 20A and the light-blocking portions 20B on the display surface 10A at an image cycle pitch Cp(z). This allows the 3D display device 100 to change the image cycle pitch Cp(z) as appropriate for the observation distance z and display a high-quality 3D image when the viewer moves in the front-rear direction.

$$t_i(z) = \frac{b \cdot E \cdot g}{Hp \cdot z} - \frac{n}{2}$$

$$\cdots (2 4)$$

This structure allows the 3D display device 100 to increase the number of subpixels ti(z) as the observation distance z decreases and display a high-quality 3D image by following movement of the viewer toward the barrier panel 20.

In the 3D display device 100 according to the present embodiment, the controller 30 may calculate the number of subpixels ti(z) expressed by Formula 25 below, where E is the interocular distance between the first eye 5R and the second eye SL of the viewer moving away from the barrier panel 20, and the intersection between the display surface 10A of the display panel 10 and a perpendicular line extending through the center position between the first eye 5R and the second eye SL and perpendicular to the display surface 10A is the reference point. The controller 30 then forms multiple pattern areas defined by a combination of the transmissive portions 20A and the light-blocking portions 20B on the display surface 10A at an image cycle pitch Cp(z).

$$t(z) = \frac{b \cdot E \cdot g}{Hp \cdot z} + \frac{n}{2} \qquad \cdots (25)$$

This structure allows the 3D display device 100 to increase the number of subpixels ti(z) as the observation distance z increases and display a high-quality 3D image by following movement of the viewer away from the barrier panel 20.

In the embodiments described above, the barrier panel 20 is in front of the display panel 10 as viewed from the viewer. The barrier panel 20 may be located variously as appropriate for the type of the display panel 10. For the display panel 10 being a backlight transmissive display panel, for example, the barrier panel 20 may be in front of or behind the display panel 10 as viewed from the viewer. For the display panel 10 being a self-luminous display panel, for example, the barrier panel 20 may be in front of the display panel 10 as viewed from the viewer.

The 3D display device 100 may include a backlight device behind the display panel 10 to illuminate the surface of the display panel 10. The backlight device may include a light source including multiple light emitters such as LEDs arranged in a matrix, a light guide plate, a diffusion plate, and a diffusion sheet. The backlight device emits illumination light using the light source and spreads the illumination light uniformly for illuminating the surface of the display panel 10 using, for example, the light guide plate, the diffusion plate, or the diffusion sheet. The backlight device emits uniform light toward the surface of the display panel 10.

The present disclosure may be implemented in the following forms.

In one or more embodiments of the present disclosure, a three-dimensional display device includes a display panel, a barrier panel, a position detector, and a controller. The display panel includes a plurality of subpixels. The plurality of subpixels is arranged in a first direction and a second direction intersecting with the first direction. The plurality of subpixels emits image light. The barrier panel overlaps the display panel in an optical path of the image light. The barrier panel includes a plurality of shutter panels. The plurality of shutter panels is arranged in the first direction and the second direction. The plurality of shutter panels is switchable between a transmissive portion to transmit light and a light-blocking portion to block the light. The position detector detects a position of at least one of a first eye or a second eye of a viewer and outputs position detection information including a position along the optical path and a position in a parallax direction corresponding to the first direction. The controller controls the display panel and the barrier panel. The controller calculates a cumulative error between a barrier pitch Bp and an image pitch k corresponding to positions of the first eye and the second eye of the viewer based on position detection information about the viewer away from a position at an observation distance, where Bp is a barrier pitch at which the transmissive portion and the light-blocking portion are arranged regularly as viewed from the position at the observation distance, and k is an image pitch of a pair of adjacent right-eye and left-eye images as viewed from the position at the observation distance. When a ratio of the calculated cumulative error to one dot is greater than a first ratio, the controller controls the image pitch k to be partially greater by at least one dot to reduce the cumulative error.

In one or more embodiments of the present disclosure, the 3D display device can reduce the cumulative error between the barrier pitch Bp and the image pitch k as appropriate for the observation distance to display an optimum 3D image, without largely changing the structure of the 3D display device.

Although the above embodiments are described as typical examples, various variations and substitutions to the embodiments are apparent to those skilled in the art without departing from the spirit and scope of the present disclosure. Thus, the above embodiments should not be construed to be restrictive, but may be variously varied or altered within the scope of the present disclosure. For example, multiple structural blocks described in the above embodiments or examples may be combined into a single structural block, or each structural block may be divided.

REFERENCE SIGNS

5R right eye
5L left eye
10 display panel
10A display surface
12 subpixel
15 display boundary
20 barrier panel
20A transmissive portion
20B light-blocking portion
30 controller
50 black matrix
51 black matrix
100 three-dimensional display device
Bp barrier pitch
Cp (z) image cycle pitch
d optimum viewing distance
k image pitch
PgL left-eye image area
PgR right-eye image area
S shutter cell

**Claims**

1. A three-dimensional display device, comprising:

   a display panel including a plurality of subpixels arranged in a first direction and a second direction intersecting with the first direction, the plurality of subpixels being configured to emit image light;
   a barrier panel overlapping the display panel in an optical path of the image light, the barrier panel including a plurality of shutter cells arranged in the first direction and the second direction, the plurality of shutter cells being switchable between a transmissive portion to transmit light and a light-blocking portion to block the light;
   a position detector configured to detect a position of at least one of a first eye or a second eye of a viewer and output position detection information including a position along the optical path and a position in a parallax direction corresponding to the first direction; and
   a controller configured to control the display panel and the barrier panel,
   wherein the controller calculates a cumulative error between a barrier pitch Bp and an image pitch k corresponding to positions of the first eye and the second eye of the viewer based on position detection information about the viewer away from a position at an observation distance, where Bp is a barrier pitch at which the transmissive portion and the light-blocking portion are arranged regularly as viewed from the position at the observation distance, and k is an image pitch of a pair of adj acent right-eye and left-eye images as viewed from the position at the observation distance, and
   when a ratio of the calculated cumulative error to one dot is greater than a first ratio, the controller controls the image pitch to be partially greater by at least one dot to reduce the cumulative error.

2. The three-dimensional display device according to claim 1, wherein
   the barrier pitch corresponds to an interval of the transmissive portion and the light-blocking portion in the first direction.

3. The three-dimensional display device according to claim 1 or claim 2, wherein
   the second direction is perpendicular to the first direction.

4. The three-dimensional display device according to any one of claims 1 to 3, wherein
   the first ration is 0.5 or a value close to 1.

5. The three-dimensional display device according to any one of claims 1 to 4, wherein

   the controller causes the plurality of subpixels and the plurality of shutter cells in the transmissive portion and the light-blocking portion to be arranged at an inclination angle θ expressed by Formula 1 below:

$$\theta = \tan^{-1}\left(\frac{a \cdot Hp}{b \cdot Vp}\right),$$

where Hp is a width of each of the plurality of subpixels in the first direction, Vp is a width of each of the plurality of subpixels in the second direction, $\theta$ is an inclination angle of each of the transmissive portion and the light-blocking portion with respect to the second direction, and a and b are natural numbers and a ≠ b, and
the controller controls the plurality of shutter cells to have a barrier pitch different from the barrier pitch of the barrier panel.

6. The three-dimensional display device according to claim 5, wherein

the barrier panel is in front of the display panel in the optical path,
the display panel includes

a first display area configured to emit image light to be perceived by the first eye of the viewer, and
a second display area configured to emit image light to be perceived by the second eye of the viewer,

the first display area and the second display area are arranged in the first direction, and
the controller adds one subpixel to display an image for an image cycle pitch Cp(z) to satisfy a formula below:

$$Cp(z) = \frac{Hp}{(+g) \cdot b} \cdot z + \frac{Hp}{b},$$

where z is an observation distance between the barrier panel and at least one of the first eye or the second eye of the viewer moving from an optimum viewing distance, and g is a distance between the display panel and the barrier panel.

7. The three-dimensional display device according to claim 5, wherein

the barrier panel is behind the display panel in the optical path,
the display panel includes

a first display area configured to emit image light perceived by the first eye of the viewer, and
a second display area configured to emit image light perceived by the second eye of the viewer,

the first display area and the second display area are arranged in the first direction, and
the controller adds one subpixel to display an image for an image cycle pitch Cp(z) to satisfy a formula below:

$$Cp(z) = \frac{Hp}{(-g) \cdot b} \cdot z + \frac{Hp}{b},$$

where b is a natural number and is a number of shutter cells included in the transmissive portion and the light-blocking portion in the second direction, z is an observation distance between the barrier panel and at least one of the first eye or the second eye of the viewer approaching the display panel, and g is a distance between the display panel and the barrier panel.

8. The three-dimensional display device according to claim 6 or claim 7, wherein

the controller forms, in a switchable manner, a plurality of pattern areas defined by a combination of the transmissive portion and the light-blocking portion on a display surface of the display panel at the image cycle pitch when ti(z) = $t_2(z)$,
ti(z) is a number of subpixels observed simultaneously with the first eye and the second eye and expressed by

$$t_1(z) = \frac{b \cdot E \cdot g}{Hp \cdot z} - \frac{n}{2},$$

where E is an interocular distance between the first eye and the second eye of the viewer approaching the barrier panel, n is a number of subpixels to display a pair of right-eye and left-eye images continuously, and an intersection between the display surface and a perpendicular line extending through a center position between the first eye and the second eye and perpendicular to the display surface is a reference point, and $t_2(z)$ is a number of subpixels observed simultaneously with the first eye and the second eye and expressed by

$$t_2(z) = -\frac{b \cdot E \cdot g}{H \cdot p \cdot z} + \frac{n}{z},$$

where E is an interocular distance between the first eye and the second eye of the viewer moving away from the barrier panel, n is a number of subpixels to display a pair of right-eye and left-eye images continuously, and an intersection between the display surface of the display panel and a perpendicular line extending through a center position between the first eye and the second eye and perpendicular to the display surface is a reference point.

FIG. 1

FIG. 2

FIG. 3

FIG. 4

# FIG. 5

# FIG. 6

# FIG. 7

5R Interocular position 5L

Right-eye image

Left-eye image

d

Barrier panel

g

Display panel
Image cycle pitch

| Pattern 23 | Pattern 24 | Pattern 1 | Pattern 2 |
|---|---|---|---|

$C_p$

X
Y
Z

# FIG. 8

100

Z
Y
X

Pattern 2  Pattern 1  Pattern 24  Pattern 23

## FIG. 9

## FIG. 10

## FIG. 11

$$B_p/2 + (B_p/n)\,t$$

t=1

Observed simultaneously by right and left eyes

## FIG. 12

$$B_p/2 - (B_p/n)\,t$$

t=1

Observed simultaneously by right and left eyes

FIG. 13

FIG. 14

FIG. 15

$$B_{p1}=10H_p$$
$$n_1=20$$

689mm

$$t_1(z)=\frac{bEg}{H_p z_{12}}-\frac{n_1}{2}$$

5R     5L

$z_{12}$mm                   $z_{12}$mm

$$t_2(z)=-\frac{bEg}{H_p z_{12}}+\frac{n_2}{2}$$

344mm

$$B_{p2}=20H_p$$
$$n_2=40$$

FIG. 16

689mm

    $B_p=10H_p$

$z_{12}$mm

    $B_p=20H_p$

344mm

FIG. 17

| $B_p=20H_p$ | Nakamura method | | Tsujino method (Known technique) | |
|---|---|---|---|---|
| | Left eye | Right eye | Left eye | Right eye |
| z=300mm | | | | |
| z=344mm (Optimum viewing distance) | | | | |
| z=518mm (Bp switching distance) | | | | |
| z=549mm | | | | |

## INTERNATIONAL SEARCH REPORT

| International application No. |
|---|
| **PCT/JP2022/000269** |

**A. CLASSIFICATION OF SUBJECT MATTER**

*G02B 30/31*(2020.01)i; *G02B 30/32*(2020.01)i; *G02F 1/13*(2006.01)i; *H04N 13/315*(2018.01)i; *H04N 13/317*(2018.01)i
FI: G02B30/31; G02B30/32; G02F1/13 505; H04N13/315; H04N13/317

According to International Patent Classification (IPC) or to both national classification and IPC

**B. FIELDS SEARCHED**

Minimum documentation searched (classification system followed by classification symbols)

G02B30/00-30/60; G02F1/13; H04N13/30-13/398

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-138498 A (JAPAN DISPLAY INC) 10 August 2017 (2017-08-10) paragraphs [0008]-[0056], fig. 1-17 | 1-7 |
| A | | 8 |
| Y | JP 2020-101660 A (UNIV PUBLIC CORP OSAKA) 02 July 2020 (2020-07-02) paragraphs [0013]-[0053], [0061]-[0095], fig. 1-4, 7-11 | 1-7 |
| A | | 8 |
| A | JP 2001-166259 A (SANYO ELECTRIC CO LTD) 22 June 2001 (2001-06-22) entire text, all drawings | 1-8 |
| A | JP 2019-95544 A (MITSUBISHI ELECTRIC CORP) 20 June 2019 (2019-06-20) entire text, all drawings | 1-8 |
| A | JP 2005-164916 A (CANON INC) 23 June 2005 (2005-06-23) entire text, all drawings | 1-8 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/000269** |

C. DOCUMENTS CONSIDERED TO BE RELEVANT

| Category* | Citation of document, with indication, where appropriate, of the relevant passages | Relevant to claim No. |
| --- | --- | --- |
| A | US 2020/0183182 A1 (BOE TECHNOLOGY GROUP CO., LTD.) 11 June 2020 (2020-06-11) <br> entire text, all drawings | 1-8 |

Form PCT/ISA/210 (second sheet) (January 2015)

**INTERNATIONAL SEARCH REPORT**
**Information on patent family members**

International application No.

**PCT/JP2022/000269**

| Patent document cited in search report | | | Publication date (day/month/year) | Patent family member(s) | | | Publication date (day/month/year) |
|---|---|---|---|---|---|---|---|
| JP | 2017-138498 | A | 10 August 2017 | US 2017/0230642 A1 paragraphs [0028]-[0077], fig. 1-17 | | | |
| JP | 2020-101660 | A | 02 July 2020 | WO 2020/130047 A1 paragraphs [0011]-[0051], [0059]-[0093], fig. 1-4, 7-11 | | | |
| JP | 2001-166259 | A | 22 June 2001 | US 6970290 B1 entire text, all drawings EP 1087627 A2 | | | |
| JP | 2019-95544 | A | 20 June 2019 | US 2019/0158816 A1 CN 109814312 A | | | |
| JP | 2005-164916 | A | 23 June 2005 | (Family: none) | | | |
| US | 2020/0183182 | A1 | 11 June 2020 | WO 2019/148842 A1 EP 3748418 A1 CN 110095871 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8050280 A